# EUROPÄISCHE PATENTSCHRIFT

(11) **EP 0 379 956 B1**
(45) Veröffentlichungstag und Bekanntmachung des Hinweises auf die Patenterteilung: **16.03.1994**
(21) Anmeldenummer: 90100910.0
(22) Anmeldetag: 17.01.1990
(51) Int. Cl.: B60R 22/42

(54) **Sicherheitsgurtaufroller mit Gurtband-Klemmeinrichtung**
Seat belt retraction with a belt-clamping device
Rétracteur de ceinture de sécurité comportant un dispositif de serrage de sangle

(30) Priorität: 26.01.1989 DE 3902295
(43) Veröffentlichungstag der Anmeldung: 01.08.1990
(73) Patentinhaber: TRW REPA GMBH, 73553 Alfdorf (DE)
(72) Erfinder: Föhl, Artur, D-7060 Schorndorf (DE)
(74) Vertreter: Degwert, Hartmut, Dipl.-Phys.

(56) Entgegenhaltungen:
- DE-U- 8 508 792
- US-A- 3 955 774
- US-A- 4 241 886

## Beschreibung

Die Erfindung betrifft einen Sicherheitsgurtaufroller mit einem lastaufnehmenden Gehäuse, einer im Gehäuse drehbar gelagerten Aufrollerwelle, einer der Aufrollerwelle in Gurtband-Abzugsrichtung nachfolgenden Gurtband-Klemmeinrichtung mit einem am Gehäuse beweglich gelagerten Klemmglied und einer diesem im Abstand gegenüberliegenden, gehäusefesten Klemmfläche, einer mindestens gurtbandsensitiv auslösbaren Betätigungseinrichtung, die bei Auslösung das Klemmglied gegen das Gurtband und dieses gegen die Klemmfläche drückt, und die einen am Gehäuse drehbar gelagerten, mit einer Innenverzahung versehenen Ring, einen an dem Umfang des Rings angeschlossenen Ausleger, an dessen freiem Ende ein Zapfen befestigt ist und wenigstens eine seitlich an der Aufrollerwelle exzentrisch und schwenkbar gelagerte Klinke aufweist, deren Angriffsfläche der Innenverzahnung des Ringes gegenüberliegt.

Ein derartiger Sicherheitsgurtaufroller mit Gurtband-Klemmeinrichtung ist aus dem DE-U-85 08 792 bekannt. Zur Aktivierung eines beweglichen Klemmglieds ist ein innenverzahnter Ring mittels durch Umfangsschlitze geführte Befestigungsschrauben am Gehäuse begrenzverdrehbar angeordnet. Eine an der Seite der Gurtspule beweglich gelagerte Klinke wird fahrzeugsensitiv in die Verzahnung des Ringes eingesteuert, um diesen mit der Gurtspule drehfest zu koppeln. Der Ring ist ferner mit einem außerhalb seines Umfangs exzentrisch gelegenen Zapfen versehen, der in der Tangentialebene des ablaufenden Gurtbandes angeordnet ist. In der zum Gurtbandablauf entgegengesetzten Richtung greift am Zapfen eine Feder an, die ihrerseits in der Gurtbandebene verlaufend am Gehäuse befestigt ist. In Richtung des Gurtbandablaufs, entgegengesetzt zur Wirkrichtung der Kraft der Feder, ist am Zapfen eine Schubstange angebracht, die axial längs verschiebbar mit einem seitwärts von der Schubstange am Gehäuse gelagerten Hebel verbunden ist. Der Hebel ist einerseits formschlüssig auf einer Vierkantstange aufgesetzt, die ihrerseits mit dem beweglichen Klemmglieds gekoppelt ist.

Der Erfindung liegt die Aufgabe zugrunde, einen Sicherheitsgurtaufroller mit Gurtband-Klemmeinrichtung zur Verfügung zu stellen, der kostengünstig herstellbar ist und mit kurzen Steuerwegen arbeitet, um besonders schnell und zuverlässig anzusprechen.

Diese Aufgabe wird bei einem Sicherheitsgurtaufroller der eingangs angegebenen Art erfindungsgemäß dadurch gelöst, daß der Zapfen in ein an dem Klemmglied angebrachtes Langloch eingreift, das sich in einer zur Ebene der Klemmfäche etwa senkrechten Richtung erstreckt, und daß die Klinke durch Massenträgheitskräfte entgegen der Kraft einer Rückholfeder in Kupplungseingriff mit der Innenverzahnung des Ringes einsteuerbar ist. Die vorzugsweise zumindest annähernd in ihrem Schwerpunkt gelagerte Klinke wird bei plötzlichem Gurtbandabzug, also gurtbandsensitiv, aufgrund der an ihr auftretenden Trägheitskräfte in Kupplungseingriff mit der Innenverzahnung des Ringes eingesteuert, bevor die Aufrollerwelle eine hohe Umfangsgeschwindigkeit erreicht hat. Da die Klinke in den meisten Fällen in die nächsterteichbare Zahnlücke der Innenverzahnung einfällt, ist der Kupplungseingriff nach wenigen Winkelgraden der Aufrollerwellendrehung vollzogen. Der Ring und der daran angeschlossene Ausleger werden bei weiterer Drehung der Aufrollerwelle aufgrund des Gurtbandzuges mitgedreht, und die Schwenkbewegung des Auslegers wird unmittelbar auf das Klemmglied übertragen, wobei eine Drehung des Ringes bzw. Verschwenkung des Auslegers um wenige Winkelgrade ausreicht, um den Betätigungshub des Klemmgliedes zu vollziehen.

Eine weitere Verkürzung der Ansprechzeit in Verbindung mit einer Steigerung der Zuverlässigkeit wird bei einer bevorzugten Ausführungsform dadurch erreicht, daß an der Seite der Aufrollerwelle eine zweite Klinke exzentrisch und schwenkbar gelagert ist und die Angriffsflächen der beiden Klinken an der Seite der Aufrollerwelle gegeneinander in Umfangsrichtung um einen Winkel versetzt sind, der zumindest annähernd einem ungeradzahligen Vielfachen des halben Teilungsschrittes der Innenverzahnung des Ringes entspricht. Wenn eine der beiden Klinken mit ihrer Angriffsfläche auf eine Zahnspitze der Innenverzahnung des Ringes treffen sollte, so daß die Gefahr eines Abprellens und einer Verzögerung des Kupplungseingriffs besteht, trifft die Angriffsfläche der anderen Klinke mit Sicherheit zwischen zwei benachbarte Zähne der Innenverzahnung, so daß dann der Kupplungseingriff nach einer Aufrollerwellendrehung vollzogen ist, die lediglich einem halben Teilungsschritt der Innenverzahnung entspricht.

Ein weiterer Vorteil des erfindungsgemaßen Sicherheitsgurtaufrollers besteht darin, daß für die Aktivierung der Gurtband-Klemmeinrichtung geringe Steuerkräfte ausreichen, da die durch den Gurtzug verursachte Drehung der Aufrollerwelle auf direktestem Wege, also unter weitgehender Vermeidung von Verlusten, als Betätigungshub auf das Klemmglied übertragen wird. Nachdem das Klemmglied bis an das Gurtband herangeführt ist und die Klemmwirkung einsetzt, tritt in an sich bekannter Weise ein Selbstverstärkungseffekt auf, durch den die Klemmkraft mit zunehmendem Gurtbandzug überproportional zunimmt. Es muß also nur dafür gesorgt werden, daß für die Bewegung des Klemmgliedes bis an das Gurtband möglichst geringe Betätigungskräfte erforderlich sind. Dies wird bei einer weiteren vorteilhaften Ausführungsform dadurch erreicht, daß das Klemmglied und das Gehäuse miteinander zusammenwirkende Translationsführungsmittel wie Nuten oder Schlitze und darin gleitverschiebbare Rippen oder Stege aufweisen.

Weiterhin ist der erfindungsgemäße Sicherheitsgurtaufroller vorzugsweise auch mit einer fahrzeugsensitiven Auslöseeinrichtung ausgestattet. Diese besteht in an sich bekannter Weise aus einem Trägheitssensor mit Steuerklinke und einem Steuerzahnrad, dessen Verzahnung der Steuerklinke gegenüberliegt und an derselben Seite der Aufrollerwelle wie die Klinke begrenzt drehbar gegenüber dieser gelagert ist. Das Steuerzahnrad trägt einen Betätigungsansatz, der direkt auf die Klinke einwirkt, um auf kürzestmöglichem Wege einen Kupplungseingriff zwischen der Klinke und der Innenverzahnung des Ringes zu vollziehen.

Weitere Merkmale und Vorteile der Erfindung ergeben sich aus den Unteransprüchen sowie aus der folgenden Beschreibung mehrerer Ausführungsformen und aus der Zeichnung, auf die Bezug genommen wird. In der Zeichnung zeigen:
- Fig. 1: eine teilweise im Schnitt gezeigte Seitenansicht einer ersten Ausführungsform des Sicherheitsgurtaufrollers;
- Fig. 2: einen durch die Achse der Aufrollerwelle gelegten Schnitt des in Fig. 1 gezeigten Sicherheitsgurtaufrollers;
- Fig. 3: eine teilweise im Schnitt gezeigte Seitenansicht einer zweiten Ausführungsform des Sicherheitsgurtaufrollers;
- Fig. 4: eine durch die Achse der Aufrollerwelle gelegte Schnittansicht des in Fig. 3 gezeigten Sicherheitsgurtaufrollers;
- Fig. 5 und 6: Perspektivansichten beider Ausführungsformen; und
- Fig. 7 und 8: zwei Ausführungsvarianten beider Ausführungsformen.

Bei beiden Ausführungsformen ist in einem lastaufnehmenden Gehäuse 10 eine Aufrollerwelle 12 drehbar gelagert. Die das Gurtband 14 aufnehmende Aufrollervelle ist mit seitlichen axialen Lageransätzen 16, 18 versehen. Am Lageransatz 16 greift eine Aufrollerfeder 20 an. Auf dem Lageransatz 18 ist die Nabe 21 eines Steuerzahnrades 22 drehbar gelagert. Das Steuerzahnrad 22 wirkt mit einer Steuerklinke 24 zusammen, die durch einen Trägheitssensor in Form einer Massekugel 26 mit den Zähnen des Steuerzahnrades 22 in Eingriff bewegbar ist.

An der einen Seitenfläche der Aufrollervelle 12, welche dem Steuerzahnrad 22 benachbart liegt, sind mittels Lagerzapfen 28 zwei Klinken 30, 32 schwenkbar und einander annähernd diametral gegenüberliegend gelagert. Zwischen einer Seitenwand des Gehäuses 10 und einer daran durch Nieten 34 befestigten, teilringförmigen Führungsscheibe 36 ist ein Aufnahmeraum gebildet, in welchem ein Ring 38 mit geringem Spiel verdrehbar aufgenommen und geführt ist. Dieser Ring 38 ist mit einer Innenverzahnung 40 versehen, welche die Angriffsflächen der Klinken 30, 32 umgibt. An den Außenumfang des Ringes 38 ist ein Betätigungsansatz in Form eines Auslegers 42 angeschlossen. An seinem freien Ende trägt der Ausleger 42 einen in Axialrichtung (bezogen auf die Aufrollervelle 12) abstehenden Zapfen 44, der sich durch ein kreisbogenförmiges Langloch 45 in einer Seitenplatte des Gehäuses 10 erstreckt und an dessen einem Ende das eine Ende einer Rückholfeder 46 eingehängt ist, deren anderes Ende am Gehäuse 10 festgelegt ist. Das andere Ende des Zapfens 44 ist mit einem zylindrischen Einstich 48 versehen und greift in ein Langloch 50 ein, welches in einem an einen Klemmschuh 52 angeschlossenen, ösenförmigen Übertragungsteil 54 angebracht ist. Der Klemmschuh 52 ist seitlich mit rippen- oder stegförmigen Ansätzen 55, 56 versehen, die in entsprechend geformten Schlitzen 58, 60 in den Seitenwänden des Gehäuses 10 leichtgängig geführt sind. Eine weitere Führung des Klemmschuhs 52 wird durch eine gehäusefeste Rippe 62 bewirkt, die in eine Führungsnut 64 des Klemmschuhs 52 eingreift, wobei die Ansätzen 55, 56 und die Rippe 62 zueinander senkrecht orientiert sind, so daß eine dreidimensionale Führung des Klemmschuhs 52 gewährleistet ist.

Der Klemmschuh 52 liegt einer gehäusefesten Klemmfläche 66 in geringem Abstand gegenüber, so daß das Gurtband 14 zwischen der Klemmfläche 66 und dem Klemmschuh 52 unbehindert durchlaufen kann, solange die Klemmeinrichtung nicht aktiviert ist. Auf seiner von der Klemmfläche 66 abgewandten Rückseite ist der Klemmschuh 52 durch einen im Querschnitt U-förmigen, lastaufnehmenden Bügel 68 abgestützt, der in den Seitenwänden des Gehäuses 10 verankert ist.

Die Klinken 30, 32 sind zumindest annähernd in ihrem Schwerpunkt gelagert und stehen unter der Wirkung je einer Rückholfeder 31 bzw. 33, die bei der gezeigten Ausführungsform als Blattfeder ausgebildet ist und einerseits an der Seite der Aufrollerwelle 12 eingespannt ist sowie andererseits mit ihrem freien Ende an der Innenseite eines hakenförmigen Ansatzes der Klinke 30 bzw. 32 anliegt, welche der Angriffsfläche der Klinke gegenüberliegt.

Das Steuerzahnrad 22 trägt zwei nockenförmige Betätigungsansätze 23, die jeweils an der Innenfläche der benachbarten Klinke 30 bzw. 32 anliegen, wenn diese durch die zugehörige Feder 31 bzw. 33 in ihrer Ruhestellung außer Eingriff mit der Innenverzahnung 40 des Ringes 38 gehalten ist.

Es wird nun die Funktionsweise dieser Ausführungsform des Sicherheitsgurtaufrollers beschrieben.

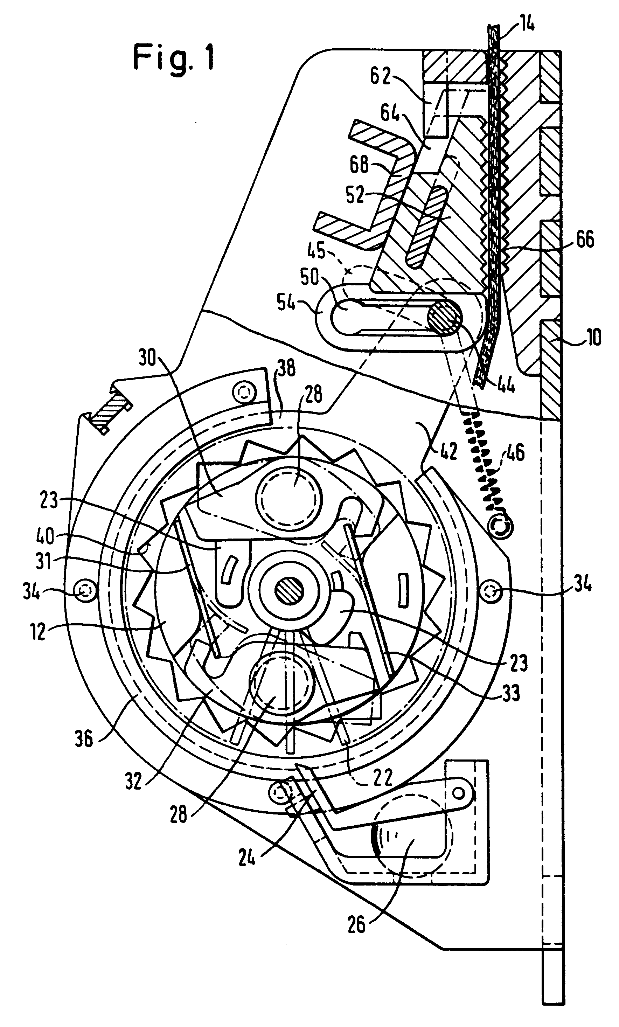

Bei ruckartigem Abzug des Gurtbandes 14 von der Aufrollerwelle 12 tritt an dieser eine hohe Drehbeschleunigung auf, die über die Lagerzapfen 28 den Klinken 30, 32 mitgeteilt wird. Da die Klinken 30, 32 aufgrund ihrer Massenträgheit bestrebt sind, in ihrer im Raume definierten Lage zu verbleiben, während die Aufrollervelle 12 eine Drehbewegung ausführt, werden die Angriffsflächen der Klinken 30, 32 auswärts verschwenkt und gelangen in Eingriff mit der Innenverzahnung 40 des Ringes 38. Die Angriffsflächen der Klinken 30, 32 sind aber in Umfangsrichtung um einen Winkel gegeneinander versetzt, der zumindest annähernd einem ungeradzahligen Vielfachen des halben Teilungsschrittes der Innenverzahnung 40 des Ringes 38 entspricht. So ist aus Fig. 1 ersichtlich, daß die Klinke 32 mit ihrer nasenförmigen Angriffsfläche genau einer Zahnspitze der Innenverzahnung 40 gegenüberliegt, während die Klinke 30 mit ihrer Angriffsfläche einer Zahnrückenzone etwa mittig zwischen zwei aufeinanderfolgenden Zahnspitzen der Innenverzahnung 40 gegenüberliegt. In dem wenig wahrscheinlichen Fall, daß die Angriffsfläche einer der Klinken 30, 32 auf eine Zahnspitze der Innenverzahnung 40 trifft, hat die Aufrollerwelle 12, da die Klinken 30, 32 auf Trägheitskraft ansprechen, noch keine hohe Umfangsgeschwindigkeit erreicht, so daß ein Abprellen der Klinke an sich nicht zu befürchten ist. In einer solchen Situation wird aber die zweite Klinke nach einer weiteren Drehung der Aufrollervelle um wenige Winkelgrade, die etwa der halben Zahnteilung entsprechen, in einer Zahnlücke der Innenverzahnung 40 einrasten. Der Kupplungseingriff zwischen der Aufrollerwelle 12 und dem Ring 38 ist daher in jedem Falle nach einer Drehung der Aufrollerwelle um wenige Winkelgrade vollzogen.

Bei weiterer Drehung der Aufrollerwelle 12 wird der Ring 38 mitgedreht, wodurch er den auslegerförmigen Betätigungsansatz 42 verschwenkt und der daran befestigte, in dem kulissenartigen Langloch 45 geführte Zapfen 44 in dem Langloch 50 hochfährt. Der Zapfen 44 beschreibt die in Fig. 1 mit gestrichelten Linien angedeutete kreisbogenförmige Bewegung. Die Projektion des so beschriebenen Kreisbogens auf eine zur Klemmfläche 66 parallele Ebene weist eine Länge auf, die dem Betätigungshub des Klemmschuhs 52 entspricht. Die parallel zur Klemmfläche 66 gerichtete Längskomponente der bogenförmigen Bewegung des Zapfens 44 wird über die Berandung des Langlochs 50 und das Übertragungsteil 54 auf den Klemmschuh 52 übertragen, dem so eine Bewegung erteilt wird, deren Richtung durch die Translationsführungsmittel bestimmt wird, welche aus den seitlichen Ansätzen 55, 56, den Schlitzen 58, 60, der Rippe 62 und dem Schlitz 64 bestehen. Die Bewegung des Klemmschuhs 52 ist schräg gegen das Gurtband 14 und auf die Klemmfläche 66 zu gerichtet. Sobald der Klemmschuh 52 an dem Gurtband 14 in Anlage ist und das Gurtband gegen die Klemmfläche 66 drückt, tritt ein Selbstverstärkungseffekt aufgrund der Keilform des Klemmschuhs 52 auf, wodurch die Klemmkraft mit zunehmender Zugkraft im Gurtband 14 überproportional ansteigt. Die geometrischen Verhältnisse sind aber so gewählt, daß nach Beendigung des Gurtzuges der Klemmschuh 52 unter der Wirkung der Rückholfeder 46 wieder in seine Ruhestellung gelangt, in welcher das Gurtband 14 frei zwischen Klemmfläche 66 und Klemmschuh 52 durchlaufen kann.

Einen Beitrag zur sauberen Führung des Klemmschuhs 52 liefert auch der Einstich 48 des Zapfens 44, in dem die den Einstich 48 begrenzenden radialen Flächen an den Seiten des Übertragungsteils 54 anliegen.

Die fahrzeugsensitive Auslösung erfolgt mittels der Massekugel 26 und der Steuerklinke 24, die zwischen die Zähne des Steuerzahnrads 22 einfällt und dieses anhält, so daß eine Relativdrehung zwischen Gurtwelle 12 und Steuerzahnrad 22 stattfindet, die mittels der nockenförmigen Betätigungsansätze 23 auf die Klinken 30, 32 übertragen wird, um diese in die Innenverzahnung 40 des Ringes 38 auszulenken.

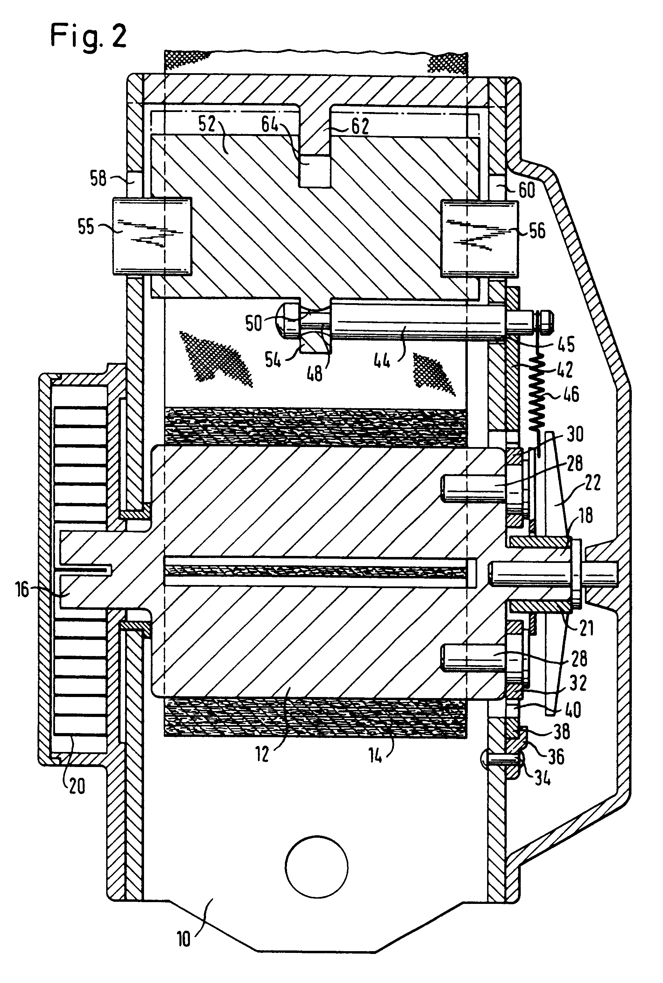

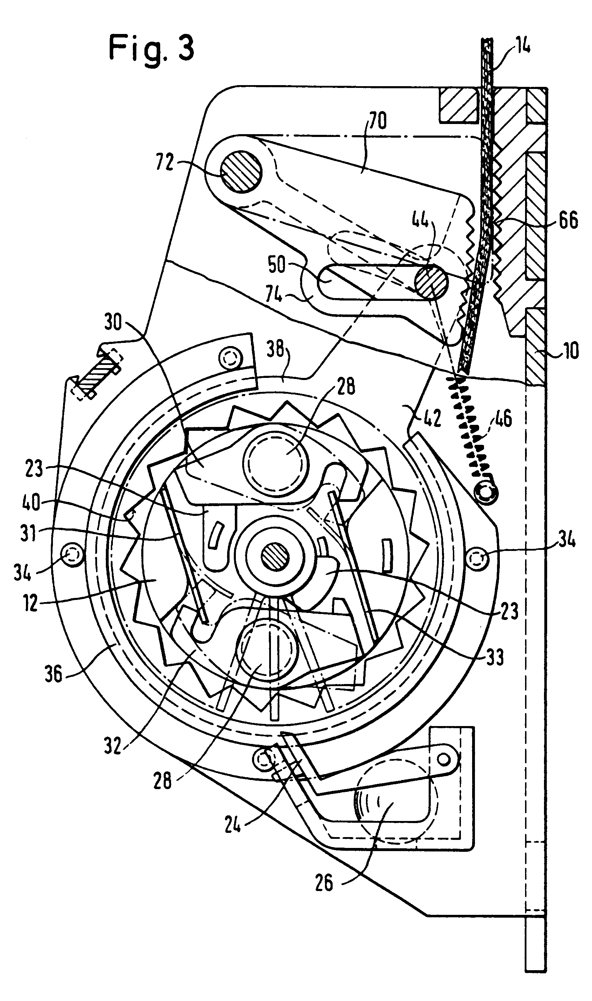

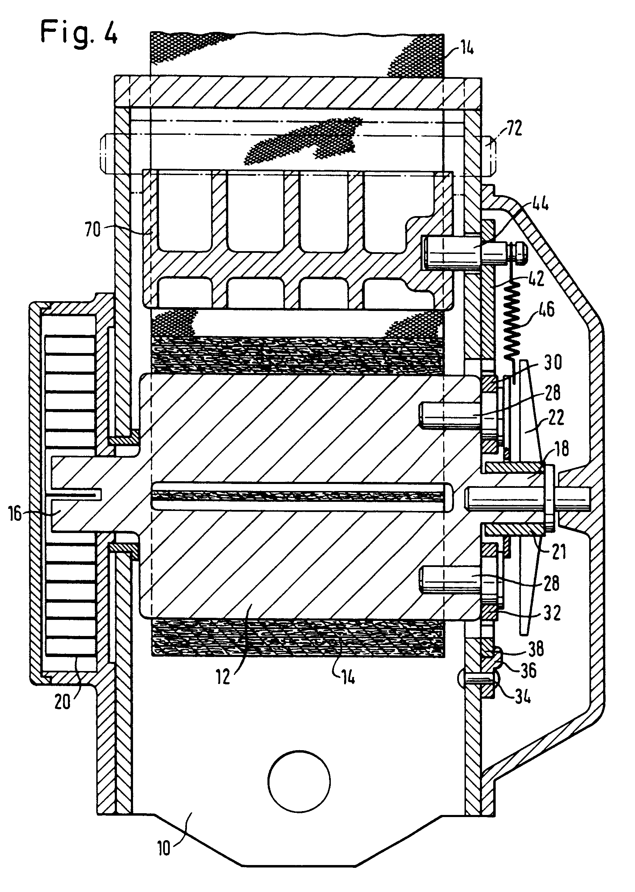

Die in den Fig. 3 und 4 gezeigte Ausführungsform unterscheidet sich von der nach den Fig. 1 und 2 durch die Ausbildung des Klemmgliedes. Soweit die Ausführungsform nach den Fig. 3 und 4 mit der nach den Fig. 1 und 2 übereinstimmt, wird sie nicht erneut beschrieben.

Bei der Ausführungsform nach den Fig. 3 und 4 ist das Klemmglied als Klemmhebel 70 ausgebildet. An seinem einen Seite ist dieser Klemmhebel 70 auf einer Welle 72 lastaufnehmend schwenkbar zwischen den Seitenklappen des Gehäuses 10 gelagert. An seinem anderen Ende ist der Klemmhebel 70 mit einer Klemmfläche versehen, die der Klemmfläche 66 bzw. dem Gurtband 14 gegenüberliegt. Das Langloch 50 ist in einem ösenförmigen seitlichen Übertragungsansatz 74 des Klemmhebels 70 gebildet. Da der Klemmhebel 70 auf der Welle 72 schwenkbar gelagert ist, erübrigen sich weitere Führungsmittel. Wie ein Vergleich der Fig. 1 und 3 miteinander zeigt, zeichnet sich die Ausführungsform nach Fig. 3 durch eine besonders geringe Baulänge aus. Der für die sichere Klemmung des Gurtbandes 14 benötigte Selbstverstärkungseffekt wird durch geeignete Wahl der geometrischen Verhältnisse sichergestellt, insbesondere durch Bemessung des Anstellwinkels des Klemmhebels 70 zur Klemmfläche 66.

Bei einer weiteren Ausführungsform, die in der Zeichnung nicht gesondert dargestellt ist und mit beiden beschriebenen Ausführungsformen kombiniert werden kann, befindet sich auf jeder Seite der Aufrollerwelle 12 ein Betätigungsmechanismus mit Kupplungsklinken, innenverzahntem Rad und Betätigungsansatz für das Klemmglied, so daß dieses auf seinen beiden Seiten gleichzeitig angesteuert wird. Um eine vollkommene Synchronität der Ansteuerung auf beiden Seiten zu erreichen, ist es zweckmäßig, die beiden Betätigungsansätze oder Ringe drehfest miteinander zu verbinden.

Bei den beschriebenen Ausführungsformen wird die Rückstellung des Klemmgliedes über die am Zapfen 44 angreifende Rückholfeder 46 bewirkt, da die durch den Zapfen 44 und das Langloch 50 gebildete Kopplungseinrichtung sowohl Druck als auch Zug überträgt. Bei einer weiteren, in der Zeichnung nicht gesondert dargestellten Ausführungsform bildet das Ende des Auslegers 42 einen Nocken, der auf einer Kurvenfläche des Klemmgliedes läuft und lediglich Druck auf dieses überträgt. Es ist dann eine gesonderte Rückholfeder dem Klemmglied zugeordnet.

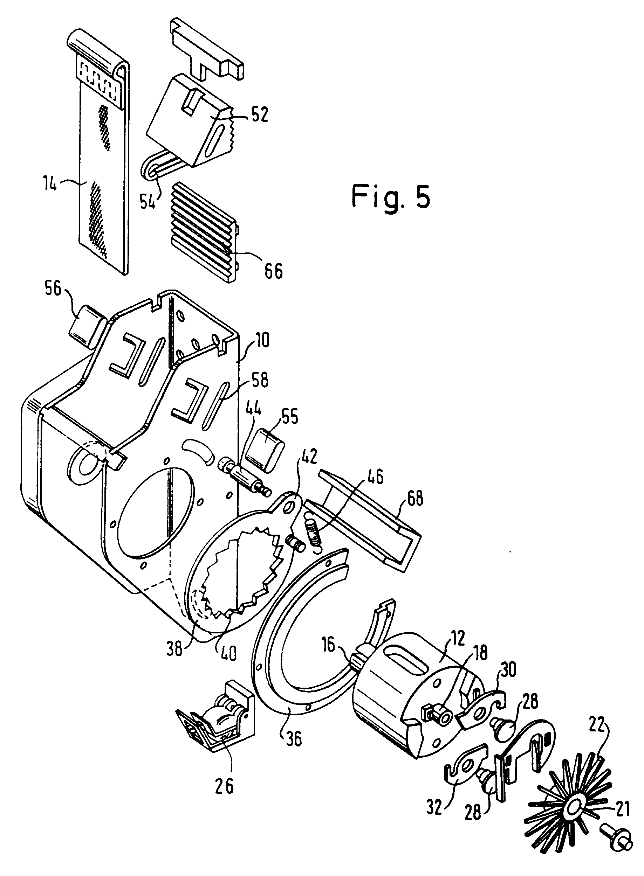

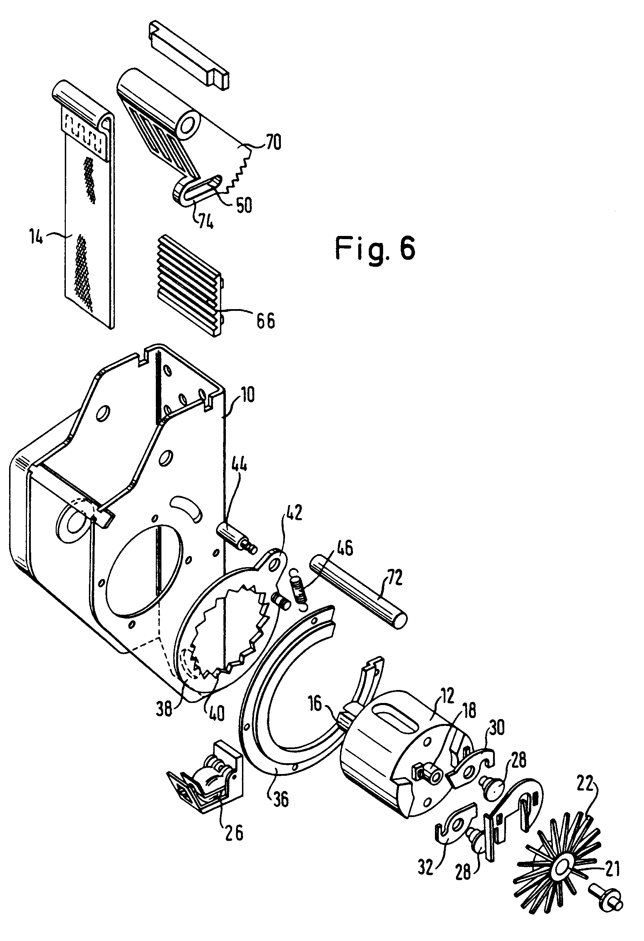

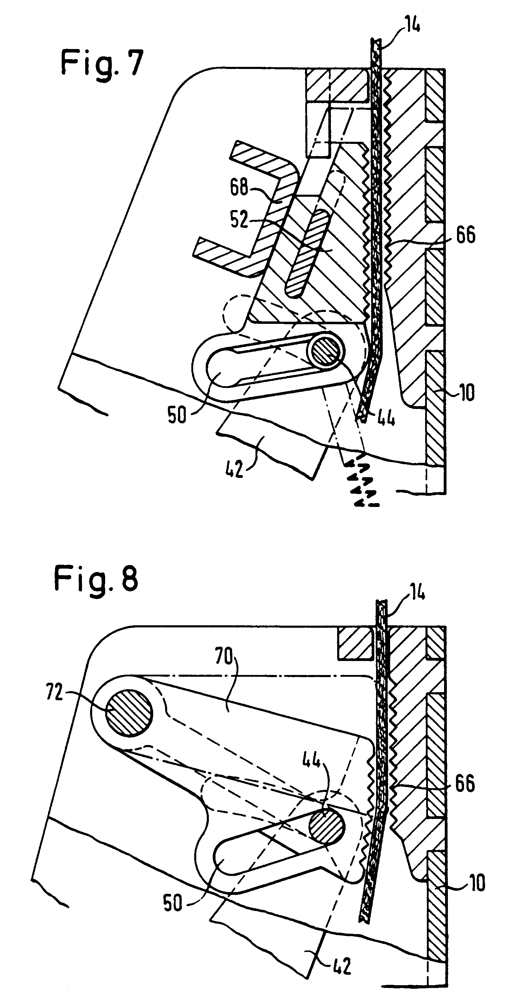

Bei den in den Fig. 7 und 8 gezeigten Varianten der Ausführungsformen nach den Fig. 1 bis 6 ist das Langloch 50 unter einem von 90° abweichenden Winkel zur Ebene der Klemmfläche 66 orientiert. Durch Bemessung dieses Winkels und Gestaltung der Form des Langloches 50 abweichend von der gezeigten geraden Ausführung kann das Klemmverhalten in weiten Grenzen verändert werden. Insbesondere kann erreicht werden, daß nach erfolgter Klemmung das Klemmglied mit geringem Kraftaufwand aus der Klemmstellung in die Lösestellung zurückgeführt wird, so daß die Rückholfeder 46 entsprechend schwach dimensioniert werden kann, wodurch sich wiederum niedrige Ansteuerkräfte erzielen lassen. Andererseits kann es je nach Anwendung erwünscht sein, daß nach erfolgter Klemmung das Klemmglied in der Klemmstellung verbleibt. Auch dies läßt sich durch Gestaltung und Orientierung des Langlochs 50 erzielen.

## Patentansprüche

1. Sicherheitsgurtaufroller mit:
- einem lastaufnehmenden Gehäuse (10);
- einer im Gehäuse (10) drehbar gelagerten Aufrollerwelle (12);
- einer der Aufrollerwelle (12) in Gurtband-Abzugsrichtung nachfolgenden Gurtband-Klemmeinrichtung mit einem am Gehäuse (10) beweglich gelagerten Klemmglied (52) und einer diesem im Abstand gegenüberliegenden, gehäusefesten Klemmfläche (66);
- einer mindestens gurtbandsensitiv auslösbaren Betätigungseinrichtung, die bei Auslösung das Klemmglied (52) gegen das Gurtband (14) und dieses gegen die Klemmfläche (66) drückt und die einen am Gehäuse (10) drehbar gelagerten, mit einer Innenverzahnung (40) versehenen Ring (38), einen an dem Umfang des Rings (38) angeschlossenen Ausleger (42), an dessen freiem Ende ein Zapfen (44) befestigt ist, und wenigstens eine seitlich an der Aufrollerwelle (12) exzentrisch und schwenkbar gelagerte Klinke (30, 32) aufweist, deren Angriffsfläche der Innenverzahnung (40) des Ringes (38) gegenüberliegt,
dadurch gekennzeichnet, daß
- der Zapfen (44) in ein an dem Klemmglied (52) angebrachtes Langloch (50) eingreift, das sich in einer zur Ebene der Klemmfläche (66) etwa senkrechten Richtung erstreckt, und
- daß die Klinke (30, 32) durch Massenträgheitskäfte entgegen der Kraft einer Rückholfeder (31) in Kupplungseingriff mit der Innenverzahnung des Ringes (38) einsteuerbar ist.

2. Sicherheitsgurtaufroller nach Anspruch 1, dadurch gekennzeichnet, daß die Klinke (30, 32) zumindest annähernd in ihrem Schwerpunkt gelagert ist.

3. Sicherheitsgurtaufroller nach Anspruch 1 oder 2, dadurch gekennzeichnet, daß an der Seite der Aufrollerwelle (12) eine zweite Klinke (30, 32) exzentrisch und schwenkbar gelagert ist und daß die Angriffsflächen der Klinken (30, 32) an der Seite der Aufrollerwelle (12) gegeneinander in Umfangsrichtung um einen Winkel versetzt sind, der zumindest annähernd einem ungeradzahligen Vielfachen des halben Teilungsschrittes der Innenverzahnung (40) des Ringes (38) entspricht.

4. Sicherheitsgurtaufroller nach Anspruch 3, dadurch gekennzeichnet, daß die Klinken (30, 32) einander annähernd diametral gegenüberliegen.

5. Sicherheitsgurtaufroller nach einem der vorstehenden Ansprüche, dadurch gekennzeichnet, daß das Klemmglied (52) als Klemmschuh ausgebildet ist, der auf seiner von der Klemmfläche (66) abgewandten Seite eine zum Gurtbandverlauf hin geneigte Rampenfläche aufweist, die auf einer gehäusefesten Gegenfläche (68) abgestützt ist.

6. Sicherheitsgurtaufroller nach Anspruch 1, dadurch gekennzeichnet, daß der Zapfen (44) einen zylindrischen Einstich (48) aufweist, der zwischen zwei Flanschflächen gelegen ist, die an den Seitenflächen eines an das Klemmglied angeschlossenen, flachen Übertragungsteils (54) anliegen, in dem das Langloch (50) gebildet ist.

7. Sicherheitsgurtaufroller nach einem der vorstehenden Ansprüche, dadurch gekennzeichnet, daß das Klemmglied (52) und das Gehäuse (10) miteinander zusammenwirkende Translationsführungsmittel wie Nuten oder Schlitze (58, 60, 64) und darin gleitverschiebbare Rippen oder Stege (54, 56, 62) aufweisen.

8. Sicherheitsgurtaufroller nach einem der vorstehenden Ansprüche, dadurch gekennzeichnet, daß der Ring (38) zwischen einer Seitenwand des Gehäuses (10) und einer ring- oder teilringförmigen, an derselben Seitenwand des Gehäuses befestigten Führungsscheibe (36) gelagert ist, die mit der Seitenwand einen Aufnahmeraum bildet, in dem der Ring (38) mit geringem Spiel drehbar gelagert ist.

9. Sicherheitsgurtaufroller nach einem der vorstehenden Ansprüche, dadurch gekennzeichnet, daß auf jeder Seite der Aufrollerwelle (12) wenigstens eine Klinke (30, 32) angeordnet ist, die mit einem zugehörigen, eine Innenverzahnung (40) aufweisenden Ring (38) zusammenwirkt, und daß die jeweils an den Umfang eines Ringes (38) angeschlossenen Betätigungsansätze (42) starr miteinander verbunden sind.

10. Sicherheitsgurtaufroller nach einem der Ansprüche 1 bis 4 und 6 bis 9, dadurch gekennzeichnet, daß das Klemmglied (70) am Ende eines in dem Gehäuse schwenkbar gelagerten Hebels gebildet ist.

11. Sicherheitsgurtaufroller nach einem der vorstehenden Ansprüche, dadurch gekennzeichnet, daß der Ring (38) mit dem Ausleger (42) innerhalb von Grenzen verdrehbar ist, die nur durch den Hub des Klemmgliedes (52, 70) über die Kopplung desselben mit dem Ausleger (42) bestimmt werden.

12. Sicherheitsgurtaufroller nach einem der vorstehenden Ansprüche, dadurch gekennzeichnet, daß eine fahrzeugsensitive Auslöseeinrichtung vorgesehen ist, die aus einem Trägheitssensor (26) mit Steuerklinke (24) und einem Steuerzahnrad (22) besteht, dessen Verzahnung der Steuerklinke (24) gegenüberliegt und das an derselben Seite der Aufrollerwelle (12) wie die Klinke (30, 32) begrenzt drehbar gegenüber dieser gelagert ist sowie einen Betätigungsansatz (23) trägt, der direkt auf die Klinke (30, 32) einwirkt.

## Claims

1. Safety belt retractor comprising:
a loadbearing housing (10);
a retractor shaft (12) mounted rotatably in the housing (10);
a webbing clamping means following the retractor shaft (12) in the webbing withdrawal direction and having a clamping member (52) mounted movably on the housing (10) and a housing-fixed clamping face (66) opposite and spaced from said member; and
an actuating means which is activatable at least in webbing sensitive manner and which on activation presses the clamping member (52) against the webbing (14) and the latter against the clamping face (66), and said actuating means comprising an internally toothed (40) ring (38) rotatably mounted on the housing (10), an actuating nose (42) connected to said ring (38) and having a free end whereto a pin is connected, and at least one pawl (30, 32) which is mounted laterally on the retractor shaft (12) eccentrically and pivotally and the engagement face of which lies opposite the internal toothing (40) of the ring (38)
characterized in that
the pin (44) engages into a slot (50) formed in the clamping member (52) and extending in a direction substantially perpendicular to the plane of the clamping face (66) and
in that the pawl (30, 32) can be driven by mass inertial forces against the force of a return spring (31) into coupling engagement with the internal toothing (40) of the ring (38).

2. Safety belt retractor according to claim 1, characterized in that the pawl (30, 32) is mounted at least approximately at its centre of gravity.

3. Safety belt retractor according to claim 1 or 2, characterized in that at the side of the retractor shaft (12) a second pawl (30, 32) is mounted eccentrically and pivotally and that the engagement faces of the pawls (30, 32) at the side of the retractor shaft (12) are offset with respect to each other in the peripheral direction by an angle which corresponds at least approximately to an odd multiple of half the pitch step of the internal toothing (40) of the ring (38).

4. Safety belt retractor according to claim 3, characterized in that the pawls (30, 32) lie approximately diametrically opposite each other.

5. Safety belt retractor according to any one of the preceding claims, characterized in that the clamping member (52) is constructed as clamping shoe which on its side remote from the clamping face (66) comprises a ramp face which is inclined towards the webbing path and bears on a housing-fixed counter face (68).

6. Safety belt retractor according to claim 1, characterized in that the pin comprises a cylindrical groove (48) which is placed between two flange faces which bear on the side faces of a flat transmission member (54) which is connected to the clamping member and in which the slot (50) is formed.

7. Safety belt retractor according to any one of the preceding claims, characterized in that the clamping member (52) and the housing (10) comprise cooperating translational guide means such as grooves or slots (58, 60, 64) and ribs or webs (54, 56, 62) slidingly displaceable therein.

8. Safety belt retractor according to any one of the preceding claims, characterized in that the ring (38) is mounted between a side wall of the housing (10) and an annular or partially annular guide disc (36) which is secured to the same side wall of the housing and which with the side wall forms a receiving space in which the ring (38) is mounted rotatably with slight play.

9. Safety belt retractor according to any one of the preceding claims, characterized in that on each side of the retractor shaft (12) at least one pawl (30, 32) is disposed which cooperates with an associated internally toothed (40) ring (38) and that the actuating noses (42) each connected to the periphery of a ring (38) are rigidly connected together.

10. Safety belt retractor according to any one of claims 1 to 4 and 6 to 9, characterized in that the clamping member (70) is formed at the end of a lever pivotally mounted in the housing.

11. Safety belt retractor according to any one of the preceding claims, characterized in that the ring (38) with the actuating nose (42) is rotatable within limits which are defined only by the travel of the clamping member (52, 70) via the coupling thereof to the actuating nose (42).

12. Safety belt retractor according to any one of the preceding claims, characterized in that a vehicle sensitive release means is provided which consists of an inertia sensor (26) with control pawl (24) and a control gear (22) of which the teeth lie opposite the control pawl (24) and which is mounted on the same side of the retractor shaft (12) as the pawl (30, 32) rotatably in limited manner with respect to the latter and carries an actuating noe (23) which acts directly on the pawl (30, 32).

## Revendications

1. Enrouleur de ceinture de sécurité comprenant un boîtier (10) supportant la charge, un arbre (12) d'enrouleur gui est monté rotatif dans le boîtier (10), un dispositif de serrage de la sangle de la ceinture qui fait suite à l'arbre (12) de l'enrouleur dans le sens du prélèvement de la sangle de la ceinture et qui comprend un organe de serrage (52) monté mobile dans le boîtier (10) ainsi qu'une surface de serrage (66) solidaire du boîtier et faisant face à distance à cet organe de serrage, un dispositif d'actionnement pouvant être déclenché au moins par sensibilité à la sangle de la ceinture et qui, en cas de déclenchement, presse l'organe de serrage (52) contre la sangle (14) de la ceinture et cette dernière contre la surface de serrage (66), ce dispositif d'actionnement comprenant un anneau (38) monté rotatif dans le boîtier (10) et comportant une denture intérieure (40), une oreille (42) reliée à la circonférence de l'anneau (38) et à l'extrémité libre de laquelle un tourillon (44) est fixé et au moins un cliquet (30, 32) monté excentriquement et pivotant latéralement sur l'arbre (12) de l'enrouleur et dont la surface d'attaque est en face de la denture intérieure (40) de l'anneau (38), caractérisé en ce que le tourillon (44) pénètre dans une boutonnière (50) réalisée dans l'organe de serrage (52) et orientée dans une direction sensiblement perpendiculaire au plan de la surface de serrage (66) et en ce que le cliquet (30, 32) peut être mis en prise d'accouplement avec la denture intérieure de l'anneau (38) par des forces d'inertie massique et contre la force d'un ressort de rappel (31).

2. Enrouleur de ceinture de sécurité selon la revendication 1, caractérisé en ce que le cliquet (30, 32) est monté au moins approximativement en son centre de gravité.

3. Enrouleur de ceinture de sécurité selon la revendication 1 ou 2, caractérisé en ce qu'un second cliquet (30, 32) est monté excentriquement et pivotant sur le côté de l'arbre (12) de l'enrouleur et en ce que les surfaces d'attaque des cliquets (30, 32) sont décalées l'une par rapport à l'autre sur le côté de l'arbre (12) de l'enrouleur dans la direction de la circonférence d'un angle qui correspond au moins approximativement à un multiple impair de la moitié du pas de la denture intérieure (40) de l'anneau (38).

4. Enrouleur de ceinture de sécurité selon la revendication 3, caractérisé en ce que les cliquets (30, 32) sont approximativement diamétralement opposés.

5. Enrouleur de ceinture de sécurité selon l'une des revendications précédentes, caractérisé en ce que l'organe de serrage (52) est conformé en patin de serrage qui comporte, sur son côté tourné à l'opposé de la surface de serrage (66), une surface en rampe qui est inclinée vers le trajet de la sangle de la ceinture et qui prend appui sur une contre-surface (68) solidaire du boîtier.

6. Enrouleur de ceinture de sécurité selon la revendication 1, caractérisé en ce que le tourillon (44) comporte une saignée cylindrique (48) qui est placée entre deux surfaces formant joues qui prennent appui contre les surfaces latérales d'un élément plat de transmission (54) qui est relié à l'organe de serrage et dans lequel la boutonnière (50) est formée.

7. Enrouleur de ceinture de sécurité selon l'une des revendications précédentes, caractérisé en ce que l'organe de serrage (52) et le boîtier (10) comportent des moyens de guidage de translation qui coopèrent les uns avec les autres tels que des rainures ou des fentes (58, 60, 64), ainsi que des nervures ou des barrettes (54, 56, 62) coulissant dans ces dernières.

8. Enrouleur de ceinture de sécurité selon l'une des revendications précédentes, caractérisé en ce que l'anneau (38) est monté entre une paroi latérale du boîtier (10) et un disque annulaire ou partiellement annulaire de guidage (36) fixé à la même paroi latérale du boîtier et formant avec la paroi latérale une chambre de logement dans laquelle l'anneau (38) est monté rotatif avec faible jeu.

9. Enrouleur de ceinture de sécurité selon l'une des revendications précédentes, caractérisé en ce qu'au moins un cliquet (30, 32) est disposé de chaque côté de l'arbre (12) de l'enrouleur et coopère avec un anneau correspondant (38) qui comporte une denture intérieure (40) et en ce que les appendices d'actionnement (42) raccordés chacun à la circonférence de chaque anneau (38) sont reliés rigidement l'un à l'autre.

10. Enrouleur de ceinture de sécurité selon l'une des revendications 1 à 4 et 6 à 9, caractérisé en ce que l'organe de serrage (70) est formé à l'extrémité d'un levier monté pivotant dans le boîtier.

11. Enrouleur de ceinture de sécurité selon l'une des revendications précédentes, caractérisé en ce que l'anneau (38) ainsi que l'oreille (42) sont rotatifs dans des limites qui sont déterminées uniquement par la course de l'organe de serrage (52, 70) via l'accouplement de ce dernier et de l'oreille (42).

12. Enrouleur de ceinture de sécurité selon l'une des revendications précédentes, caractérisé en ce qu'un dispositif de déclenchement sensible au véhicule est prévu et se compose d'un capteur d'inertie (26) comportant un cliquet de commande (24) et d'une roue dentée de commande (22) dont la denture est en face du cliquet de commande (24) et qui est montée du même côté de l'arbre (12) de l'enrouleur que le cliquet (30, 32) de manière à être rotative de manière limitée par rapport à ce dernier, cette roue dentée portant un talon d'actionnement (23) qui agit directement sur le cliquet (30, 32).
